# EUROPEAN PATENT SPECIFICATION

(11) **EP 1 273 226 B1**
(45) Date of publication and mention of the grant of the patent: **09.07.2008**
(21) Application number: 01305860.7
(22) Date of filing: 06.07.2001
(51) Int. Cl.: A01K 1/015

(54) **Granular absorbant article for pet animals**
Absorbierendes Granulat für Haustiere
Granules absorbantes pour des animaux

(43) Date of publication of application: 08.01.2003
(73) Proprietor: Unicharm PetCare Corporation, Shinagawa-ku, Tokyo 140-0031 (JP)
(72) Inventor: Ikegami, Takeshi, c/o Pet Care Business Division, Shinagawa-ku, Tokyo 140-0031 (JP); Ochi, Kengo, c/o Pet Care Business Division, Shinagawa-ku, Tokyo 140-0031 (JP)
(74) Representative: Parry, Christopher Stephen

(56) References cited:
- EP-A- 0 407 064
- EP-A- 0 569 232
- WO-A-99/56531
- US-A- 5 143 023

## Description

### TECHNICAL FIELD OF THE INVENTION

The present invention relates to a granular absorbent material for use in the treatment of excrements of house pet animals.

### BACKGROUND OF THE INVENTION

As an article for collecting excrements of house pet animals (mainly house cats), there has been used a plastic box in which a granule absorbent material (i.e., a cat litter) capable of absorbing excrements of pets, such as sand and bentonite, is provided. When it absorbs urine from a pet (e.g., a cat), such a granule absorbent material clumps so that the urine-absorbing granules are closely contact with each other. Only the clumps of the absorbent material resulting from the urine-absorption are then removed and wasted from the box.

However, a pet owner cannot always remove the clumped absorbent material immediately after his pet defecates or urinates. As a result, a problem of producing obnoxious odors from the urine or the like retained in the absorbent material remaining in the litter box may occur.
EP 0 569 232 A1 discloses an additive for cat litter. It has an inert core substrate coated with a pH indicating material capable of undergoing a clearly visually detectable color transition at a desired pH.

OBJECTS OF THE INVENTION
Accordingly, an object of the present invention is to provide an absorbent material for pet animals which can absorb pet urine quickly and eliminate the odors generated from the urine.

Another object of the present invention is to provide an absorbent material for pet animals which has an improved urine absorbing efficiency.

Additional objects, advantages and novel features of the present invention will be set forth in part in the description that follows, and in part will become apparent to those skilled in the art upon examination of the following or may be learned by practice of the invention. The objects and advantages of the invention may be realized and attained by means of the instrumentalities and combinations particularly pointed out in the appended claims.

SUMMARY OF THE INVENTION
According to a first aspect of the present invention, an absorbent material for house pet animals, includes pulp fibers containing a natural or synthetic polymer and formed in a granular shape; and a solution of an amphoteric polymer having an acidic pH. The solution is added to the pulp fibers.

According to a preferred embodiment of the present invention, an absorbent material for house pet animals, includes a core which is made of pulp fibers containing a natural or synthetic polymer and is formed in a granular shape; a covering layer which is coated onto an outer surface of the core; and a solution added to the core, in which the solution is of an amphoteric polymer having an acidic pH.

### BRIEF DESCRIPTION OF THE DRAWINGS

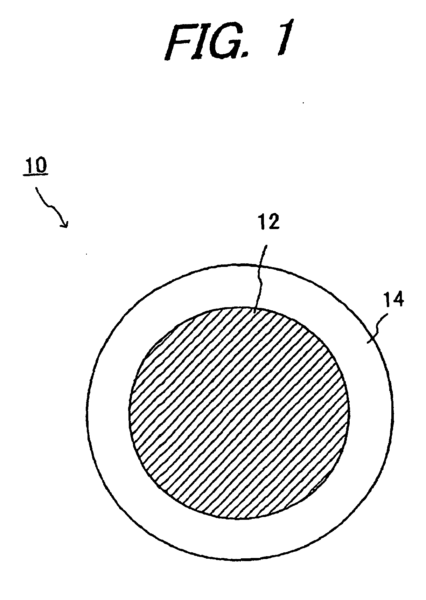

Fig. 1 is a cross sectional view showing a granular absorbent material according to an embodiment of the present invention.

### DETAILED DISCLOSURE OF THE INVENTION

In the following detailed description of the preferred embodiments, reference is made to the accompanying drawings which form a part hereof, and in which is shown by way of illustration specific preferred embodiments in which the inventions may be practiced. These embodiments are described in sufficient detail to enable those skilled in the art to practice the invention, and it is to be understood that other embodiments may be utilized and that logical, mechanical and electrical changes may be made without departing from the of the present inventions. The following detailed description is, therefore, not to be taken in a limiting sense, and scope of the present inventions is defined only by the appended claims.

Hereinafter, an embodiment of the present invention will be illustrated in which a cat litter is produced, by way of example. Although, in the present invention, the shape, size and so on of the granular absorbent material (a cat litter) are limited to those specified in the embodiment, those specifications or characteristics may vary depending on the types of the pets to be treated, circumstances where the granular absorbent material is used, and so on.

Fig. 1 is a cross sectional view showing the granular absorbent material according to the embodiment of the present invention. The granular absorbent material 10 includes a core section 12 made of a pulp and a covering layer section 14 provided surrounding the core section 12. The covering layer section 14 is made of a pulp, starch and an absorbent polymer.

For the production of the granular absorbent material 10 of the embodiment, a solution of an amphoteric polymer having an acidic pH is sprayed onto the pulp of the core section 12 and a mixture of a pulp, starch and an absorbent polymer is then coated onto the surface of the pulp to form the covering layer section 14. Thus, the solution of the polymer having an acidic pH is exuded from the core section 12 to the covering layer section 14 and fixed thereto. Alternatively, the solution of an amphoteric polymer having an acidic pH may be directly sprayed onto the surface of the covering layer section 14.

The solution of an amphoteric polymer having an acidic pH to be used as a deodorant may be a polysaccharide (i.e., a base compound) such as natural cellulose, starch and glycogen, to which at least one selected from the group consisting of a sulfone group, a carboxyl group and a phosphate group is bound.

According to the embodiment, urine is retained in the pulp through the covering layer section of the cat litter to which the solution of an amphoteric polymer is added. Alkaline substances produced from the urine such as ammonia and trimethylamine (i.e., causative substances of obnoxious odors) cause neutralization reactions with acidic functional groups of the amphoteric polymer solution added (fixed) on the core section 12 and the covering layer section 14 to eliminate the odors. In addition to the odors caused by alkaline substances, urine may also generate odors caused by acidic substances such as fatty acids and sulfides to a small extent. The odors caused by acidic substances can also be eliminated by the neutralization of such substances with the basic functional groups in the amphoteric polymer solution.

In addition, the acidic polymer solution added onto the covering layer section contains a sulfone group, a carboxyl group and/or a phosphate group. Such a functional group serves as a surfactant so as to render the covering layer section hydrophilic. As a result, urine can be absorbed into the pulp fibers quickly.

There has been described above a specific embodiment in accordance with the present invention. However, it will be appreciated that the invention is not limited thereto, and it is to be understood that modifications will be apparent to those skill in the art without departing from the scope of the invention as defined by the claims.

As described above, according to the present invention, excrements such as urine can be absorbed quickly and odors generated from urine or the like can be eliminated. In addition, the urine absorbing efficiency can be improved.

## Claims

1. An absorbent material (10) for house pet animals, comprising:
a core (12) which is made of pulp fibers containing a natural or synthetic polymer and is formed in a granular shape; and
a solution of an amphoteric polymer having an acidic pH, wherein the solution is added to the pulp fibers.

2. An absorbent material as claimed in Claim 1, wherein the solution is sprayed onto the pulp fibers.

3. An absorbent material as claimed in Claim 1 or Claim 2, wherein the solution comprises a polysaccharide such as a natural cellulose, starch and glycogen to which at least one selected from the group consisting of a sulfone group, a carboxyl group and a phosphate group is bound.

4. An absorbent material as claimed in any preceding claim, further comprising a covering layer (14) which is coated onto an outer surface of the core.

5. An absorbent material as claimed in Claim 4, wherein the covering layer comprises a mixture of a pulp, starch and an absorbent polymer.

6. An absorbent material as claimed in Claim 4 or Claim 5, wherein the solution is also added to the covering layer.

## Patentansprüche

1. Absorbierendes Material (10) für Haustiere, mit
einem Kern (12), der aus Zellstoffasern hergestellt ist, die ein natürliches oder synthetisches Polymer aufweisen, und der in Form eines Granulats gebildet ist, und
einer Lösung eines amphoterischen Polymers mit einem sauren pH-Wert, wobei die Lösung zu den Zellstoffasern zugegeben ist.

2. Absorbierendes Material nach Anspruch 1, wobei die Lösung auf die Zellstoffasern aufgesprüht wird.

3. Absorbierendes Material nach Anspruch 1 oder 2, wobei die Lösung ein Polysaccharid, wie z.B. natürliche Zellulose, Stärke und Glykogen aufweist, an das ein Element aus einer Sulfongruppe, einer Carboxylgruppe und/oder einer Phosphatgruppe gebunden wurde.

4. Absorbierendes Material nach einem der vorstehenden Ansprüche, ferner mit einer Deckschicht (14), mit der eine Außenfläche des Kerns überzogen ist.

5. Absorbierendes Material nach Anspruch 4, wobei die Deckschicht eine Mischung aus einem Zellstoff, Stärke und einem absorbierenden Polymer aufweist.

6. Absorbierendes Material nach Anspruch 4 oder 5, wobei die Lösung auch zu der Deckschicht hinzugefügt ist.

## Revendications

1. Matière absorbante (10) pour petits animaux domestiques, comprenant
un noyau (12) qui est formé de fibres de pulpe contenant un polymère naturel ou synthétique et dont ladite configuration est granulaire; et
une solution d'un polymère amphotère à pH acide, ladite solution étant ajoutée aux fibres de pulpe.

2. Matière absorbante selon la revendication 1, dans laquelle la solution est pulvérisée sur les fibres de pulpe.

3. Matière absorbante selon la revendication 1 ou la revendication 2, dans laquelle la solution comprend un polysaccharide tel qu'une cellulose naturelle, un amidon et un glycogène, auquel est lié au moins un groupe sélectionné dans le groupe consistant en un groupe sulfone, un groupe carboxyle et un groupe phosphate.

4. Matière absorbante selon l'une quelconque des revendications précédentes, qui comprend en outre une couche d'enveloppe (14) qui est déposée sur la surface externe du noyau.

5. Matière absorbante selon la revendication 4 dans laquelle la couche d'enveloppe comprend un mélange d'une pulpe, d'un amidon et d'un polymère absorbant.

6. Matière absorbante selon la revendication 4 ou la revendication 5, dans laquelle la solution est aussi ajoutée à la couche d'enveloppe.
